# EUROPÄISCHE PATENTANMELDUNG

(11) **EP 0 862 006 A2**
(43) Veröffentlichungstag der Anmeldung: **02.09.1998**
(21) Anmeldenummer: 98101996.1
(22) Anmeldetag: 05.02.1998
(51) Int. Cl.: F16K 41/10

(54) **Vorrichtung zum Verschliessen von Ventilen**

(30) Priorität: 28.02.1997 DE 29703629 U
(71) Anmelder: APV ROSISTA GMBH, 59425 Unna (DE)
(72) Erfinder: Schulz, Dieter, 44894 Bochum (DE)

(57) **Zusammenfassung**

Der Erfindung liegt die Aufgabe zugrunde, eine Vorrichtung zum Verschließen von Ventilen zu schaffen,die sich durch einfache und funktionsgerechte Bauweise und Montage sowie durch einen weitgehend freien Ventildurchgang auszeichnet.

Diese Aufgabe löst die Erfindung bei einer gattungsgemäßen Vorrichtung dadurch, daß der Ventilschließkörper (1) der Ventilschaft (2) und der Membranflansch (3) als einteiliges Bauteil aus Kunststoff ausgebildet sind. Die Erfindung geht von der Erkenntnis aus, daß der Membranflansch mit dem Ventilschaft ebenso ein einteiliges Bauteil bilden kann wie der Ventilschaft mit dem Ventilschließkörper, obwohl die Querschnitte von einerseits dem Membranflansch und andererseits dem Ventilschließkörper in bezug auf den Ventilschaft, der als Hohlschaft ausgebildet ist, extrem unterschiedlich sind. Dennoch wird eine einwandfreie Schließfunktion mit hinreichender Elastizität und selbstverständlich auch Öffnungsfunktion erreicht.

## Beschreibung

Der Erfindung liegt die Aufgabe zugrunde, eine Vorrichtung zum Verschließen von Ventilen der eingangs beschriebenen Ausführungsform zu schaffen, die sich durch einfache und funktionsgerechte Bauweise und Montage sowie durch einen weitgehend freien Ventildurchgang auszeichnet.

Diese Aufgabe löst die Erfindung bei einer gattungsgemäßen Vorrichtung dadurch, daß der Ventilschließkörper, der Ventilschaft und der Membranflansch als einteiliges Bauteil aus Kunststoff ausgebildet sind. - Die Erfindung geht von der Erkenntnis aus, daß der Membranflansch mit dem Ventilschaft ebenso ein einteiliges Bauteil bilden kann wie der Ventilschaft mit dem Ventilschließkörper, obwohl die Querschnitte von einerseits dem Membranflansch und andererseits dem Ventilschließkörper in bezug auf den Ventilschaft, der als Hohlschaft ausgebildet ist, extrem unterschiedlich sind. Dennoch wird eine einwandfreie Schließfunktion mit hinreichender Elastizität und selbstverständlich auch Öffnungsfunktion erreicht. Da nach Lehre der Erfindung auf einen Faltenbalg verzichtet wird, ist ein freier Ventildurchgang gewährleistet. Anstelle des Faltenbalges wird der Hub des Ventilschließkörpers nunmehr von dem Membranflansch aufgenommen. Da darüber hinaus auch ein Einspannen des Membranflansches an den Ventilschaft unter Zwischenschaltung einer Ringdichtung verzichtet wird, läßt sich das erfindungsgemäße Ventilbauteil - praktisch ein Membranschaft - nicht nur besonders einfach herstellen, sondern auch besonders einfach montieren. Darüber hinaus ist Funktionssicherheit gewährleistet. Die Herstellung kann beispielsweise in einer geeigneten Preßform erfolgen.

Vorzugsweise besteht zumindest der Membranflansch aus einem Elastomer oder einem Fluorpolymer, z. B. Polytetraflouräthylen (PTFE). Im Rahmen der Erfindung können der Membranflansch, der Ventilschaft und der Ventilschließkörper aus dem gleichen Kunststoff bestehen. Zweckmäßigerweise ist der Membranflansch am oberen Ende des Ventilschaftes angesetzt. In den Ventilschließkörper ist über dies in herkömmlicher Weise eine Metallbuchse zum Einschrauben der Ventilspindel eingesintert oder eingepreßt.

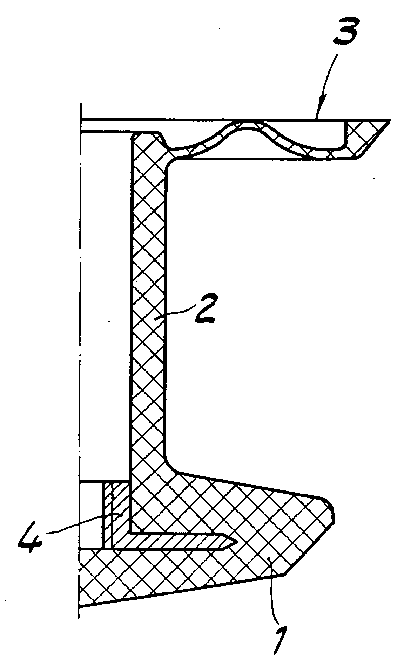

Im folgenden wird die Erfindung anhand einer lediglich ein Ausführungsbeispiel darstellenden Zeichnung näher erläutert. Die einzige Figur zeigt eine Vorrichtung zum Verschließen von Ventilen, und zwar hälftig im Vertikalschnitt.

Die dargestellte Vorrichtung weist einen Ventilschließkörper 1, einen sich an den Ventilschließkörper 1 anschließenden Ventilschaft 2 und einen sich an den Ventilschaft 2 anschließenden und an das nicht gezeigte Ventilgehäuse anschließbaren Membranflansch 3 auf. Der Ventilschließkörper 1, der Ventilschaft 2 und der Membranflansch 3 sind als einteiliges Bauteil aus Kunststoff ausgebildet. Nach dem Ausführungsbeispiel besteht dieses Bauteil aus einem Fluorpolymer, z. B. Polytetraflouräthylen, wobei der Membranflansch 3 am oberen Ende des Ventilschaftes 2 angesetzt ist. In den als Hohlschaft ausgebildeten Ventilschaft 2 ist im Bereich des Ventilschließkörpers 1 eine Buchse 4 zum Anschluß einer Ventilspindel eingesetzt.

## Patentansprüche

1. Vorrichtung zum Verschließen von Ventilen, mit einem Ventilschließkörper, einem sich an den Ventilschließkörper anschließenden Ventilschaft und einem an das Ventilgehäuse anschließbaren Membranflansch für den Ventilschaft, **dadurch gekennzeichnet**, daß der Ventilschließkörper (1), der Ventilschaft (2) und der Membranflansch (3) als einteiliges Bauteil aus Kunststoff ausgebildet sind.

2. Vorrichtung nach Anspruch 1, dadurch gekennzeichnet, daß zumindest der Membranflansch (3) aus einem Elastomer oder einem Fluorpolymer, z. B. PTFE (Polytetraflouräthylen) besteht.

3. Vorrichtung nach Anspruch 1 oder 2, dadurch gekennzeichnet, daß der Membranflansch (3) am oberen Ende des Ventilschaftes (2) angesetzt ist.
